# EUROPEAN PATENT SPECIFICATION

(11) **EP 3 511 228 B1**
(45) Date of publication and mention of the grant of the patent: **28.08.2024**
(21) Application number: 17849133.8
(22) Date of filing: 08.09.2017
(51) Int. Cl.: B62D 7/18, B29C 37/02, B29C 70/58, B29C 43/52

(54) **METHOD FOR PRODUCING A VEHICLE KNUCKLE**
VERFAHREN ZUR HERSTELLUNG EINES FAHRZEUGGELENKS
PROCÉDÉ DE FABRICATION D'UNE FUSÉE DE VÉHICULE

(30) Priority: 09.09.2016 KR 20160116786
(43) Date of publication of application: 17.07.2019
(73) Proprietor: Iljin Co., Ltd., Gyeongju-si, Gyeongsangbuk-do 38073 (KR)
(72) Inventor: KWON, Hyuk, Seoul 05409 (KR); JEONG, Se Woong, Ulsan 44750 (KR); KWON, Ig Jin, Gyeongju-si Gyeongsangbuk-do 38051 (KR); PARK, Yun Tae, Changnyeong-gun Gyeongsangnam-do 50356 (KR)
(74) Representative: RGTH
(86) International application number: PCT/KR2017/009882
(87) International publication number: WO 2018/048249

(56) References cited:
- WO-A1-2014/195481
- JP-A- 2016 075 333
- KR-A- 20130 022 152
- KR-A- 20130 022 152
- KR-A- 20150 057 464
- KR-A- 20150 065 222
- KR-A- 20150 065 222
- KR-A- 20150 103 645
- US-A1- 2020 047 575

## Description

### [Technical Field]

The present invention relates to a manufacturing method of a vehicle knuckle, which is manufactured by hot press forming carbon chip materials to achieve weight reduction and productivity improvement.

### [Background Art]

For example, KR 2013 0022152 A discloses a knuckle structure of a hub-bearing unit wherein the hub-bearing and knuckle are molded with carbon fiber reinforced plastic.

In WO 2014/195481 A1 relates to a steering knuckle that is at least partly made from a fibre-reinforced composite material.

Recently, as environmental pollution due to exhaust gas emission becomes serious, various efforts have been made in weight reduction of vehicle parts to achieve improvement in fuel efficiency and reduction in exhaust gas emission.

For example, a knuckle constituting a steering system of a vehicle has been conventionally manufactured using an aluminum material or a steel material such as chrome-molybdenum alloy steel. Recently, however, a variety of methods are being studied to manufacture a knuckle with a lightweight material capable of replacing metal materials.

As one of the methods, a method of manufacturing a vehicle knuckle using a carbon fiber reinforced plastic (CFRP) film has been proposed.

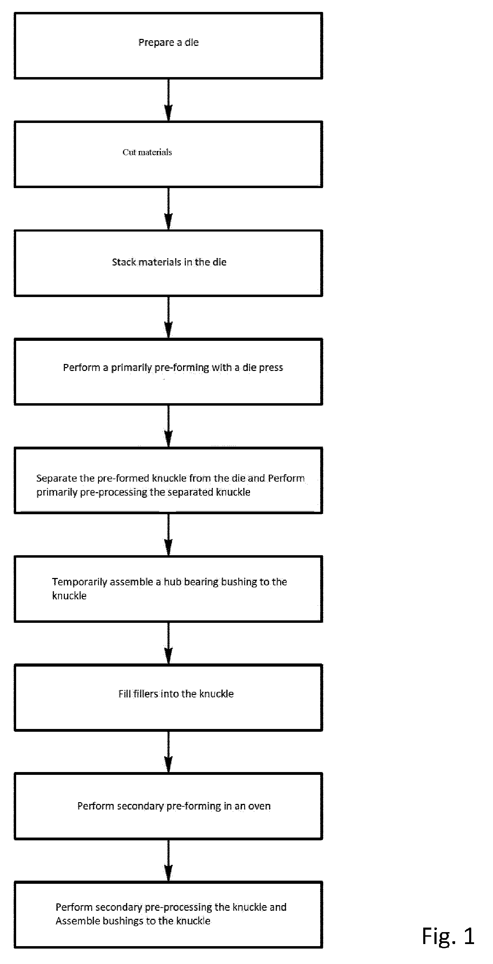

According to a conventional method, a knuckle formed of CFRP may be manufactured through following steps: preparing a die having a predetermined shape, cutting a plurality of CFRP films according to the shape of the die (a shape of a knuckle product), stacking the cut CFRP films in the die, a primary pre-forming of forming knuckle plate pieces by inserting the die in which the cut CFRP films are stacked into a die press and applying heat and pressure, a primary pre-processing of pre-processing the primarily pre-formed knuckle plate pieces after separating the primarily pre-formed knuckle plates pieces from the die, a temporarily assembling by bonding a hub bearing busing to the primarily pre-processed knuckle plate pieces with an adhesive through a jig, inserting and filling a filler in an internal space formed in the pre-assembled primarily pre-formed knuckle plate pieces, a secondary pre-forming of curing the filler by applying heat for a predetermined period of time in a state that the filler is filled and the hub bearing bushing and the primarily pre-formed knuckle plate pieces are combined, and a secondary pre-processing and bushing assembling of forming bushing holes at the secondarily pre-formed knuckle plate pieces and assembling bushings (*see* FIG. 1). According to the above-described manufacturing method, the knuckle can be manufactured using the lightweight CFRP films such that it is possible to reduce the weight of the knuckle product, and thus effects of improvement in fuel efficiency and reduction in exhaust gas can be achieved.

However, since carbon composite materials such as a CFRP film and the like, which can be used for manufacturing a vehicle structure and the like, are usually formed in a thin plate shape having a fiber texture in the form of a continuous fiber, there is a problem in that it is difficult to implement automation and mass production in a manufacturing process.

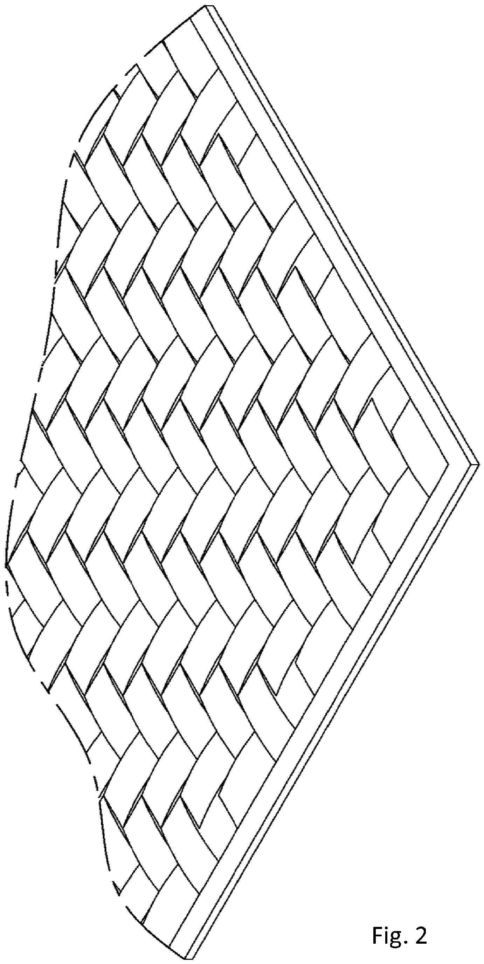

Specifically, since the continuous fiber has a fiber texture with orientation as shown in FIG. 2, in order to form a knuckle product using CFRP films in the form of such a continuous fiber, the CFRP films are first cut in a required shape and the cut CRFP films are stacked according to the orientation of the fiber texture and then the knuckle product should be manufactured. Accordingly, it takes a long time inevitably during cutting the CFRP films in a desired shape and stacking the cut CFRP films one by one according to the orientation of the fiber texture, and thus there occur a problem in that it is very difficult to implement mass production and to perform design and analysis of a product.

### [Disclosure]

### [Technical Problem]

In order to meet the trend of weight reduction in vehicle parts, the present invention provides a manufacturing method of a vehicle knuckle, which is capable of achieving weight reduction of a vehicle, improvement in fuel efficiency and performance, reduction in exhaust gas emission and high productivity so as to implement mass production, and a manufacturing method thereof, by providing a vehicle knuckle which can be manufactured with lightweight material (carbon chip) that is lighter than conventional metal materials while satisfying mechanical properties required for the vehicle.

### [Technical Solution]

According to the present invention, a method for manufacturing a vehicle knuckle is provided. According to the present invention, the method comprises preparing a die for forming the vehicle knuckle, filling the die with carbon chip materials, hot press forming the carbon chip materials filled in the die in a high temperature and high pressure environment, separating the formed vehicle knuckle from the die, trimming and removing surplus materials attached to the separated vehicle knuckle, and machining the vehicle knuckle and assembling bushings.

According to the present invention, the method further comprises locating the bushings to the die before filling the die with the carbon chip materials.

According to one embodiment of the present invention, when locating the bushings to the die, the bushings installed in a pressurizing direction of the die are located to the die.

According to one embodiment of the present invention, when locating the bushings to the die, caliper bushings and hub bolt bushings are located to a lower die and a hub bushing and caliper bushings are located to an upper die.

According to one embodiment of the present invention, the carbon chip material may have a length L in a range of 10 mm to 150 mm and a width W in a range of 3 mm to 20 mm.

### [Advantageous Effects]

The vehicle knuckle and manufacturing method thereof according to the present invention can be manufactured in a lighter weight by forming the knuckle with carbon chip materials, which are lighter than metal materials conventionally used for manufacturing a vehicle knuckle and have mechanical properties required for a vehicle. As a result, it is possible to achieve effects of reduction in overall weight of the vehicle, improvement in fuel efficiency and performance, reduction in exhaust gas emission, and the like.

Further, according to the invention, the vehicle knuckle is manufactured by hot press forming the carbon chips instead of a carbon composite material in the form of continuous fiber having orientation, and thus it is possible to reduce manufacturing processes and manufacturing time and to implement mass production.

### [Description of Drawings]

FIG. 1 is a flowchart illustrating a manufacturing process of a conventional vehicle knuckle using carbon fiber reinforced plastic films in the form of a continuous fiber.
FIG. 2 exemplarily illustrates a fiber texture of the continuous fiber.
FIG. 3 exemplarily illustrates a structure of a vehicle knuckle obtained with the manufacturing method according to the present invention.
FIG. 4 illustrates a flowchart of manufacturing method for a vehicle knuckle according to the present invention.
FIG. 5 exemplarily illustrates a die which is able to be used for manufacturing a vehicle knuckle according to the present invention.
FIG. 6 illustrates a state in which bushings (hub bushing, hub bolt bushing, caliper bushing, and the like) are mounted to the die of FIG. 5.
FIG. 7 exemplarily illustrates a carbon chip used for manufacturing the vehicle knuckle of Fig. 3.

### [Modes of the Invention]

Hereinafter, exemplary embodiments of the present invention will be fully described in a detail which is suitable for implementation by those skilled in the art to which the present invention pertains with reference to the accompanying drawings.

In order to clearly describe the present invention, a detailed description of a portion not related to the present invention will be omitted, and throughout this disclosure, a description will be made by assigning like reference numerals to like components. Further, since a shape and a size of each component shown in the drawings are arbitrarily illustrated for convenience of description, the present invention is not necessarily limited to the illustrated shape and size. That is, it should be noted that specific shapes, structures, and features described herein can be modified and implemented from one embodiment to another embodiment without departing from the spirit and scope of the present invention, and a position or an arrangement of each component can also be changed without departing from the spirit and scope of the present invention. Accordingly, the following detailed description is not to be taken in a limiting sense, and the scope of the present invention should be construed to include the scope of the appended claims and equivalents thereof.

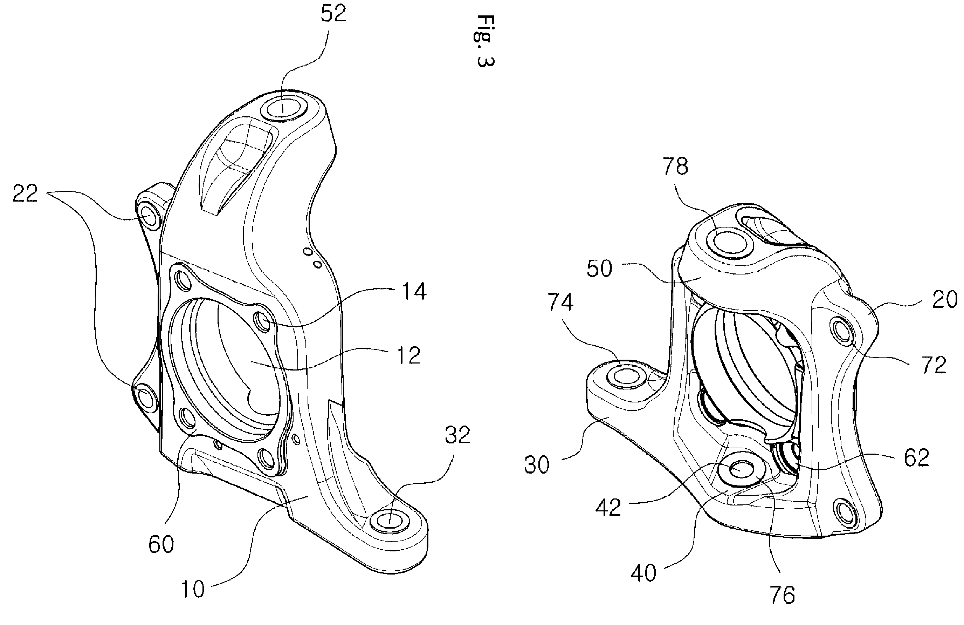

FIG. 3 exemplarily illustrates a structure of a vehicle knuckle obtainable through the manufacturing method according to the present invention. As shown in FIG. 3, the vehicle knuckle may be formed in a structure similar to that of a conventional vehicle knuckle. For example, the vehicle knuckle may comprise a knuckle body 10 and flanges (a first flange 20, a second flange 30, a third flange 40, and a fourth flange 50) extending from the knuckle body 10 and configured to connect the vehicle knuckle to other parts of a vehicle.

The knuckle body 10 is a part forming a body of the vehicle knuckle. The knuckle body 10 may be configured such that a wheel bearing installation hole 12 is formed to pass through a central portion of the knuckle body 10, and a hub bushing 60 is provided at the wheel bearing installation hole 12 to support a wheel bearing. Meanwhile, engagement holes 14 may be formed around the wheel bearing installation hole 12, and bolt bushings 62 are inserted into the engagement holes 14 to support hub bolts of a wheel bearing.

The first flange 20 is a part to which a brake caliper is connected. The first flange 20 may be formed to extend along one side surface of the knuckle body 10. Engagement holes 22 are provided at the first flange 20, and caliper bushings 72 are inserted into the engagement holes 22 such that the vehicle knuckle is connected to a brake caliper.

The second flange 30 is a part to which a tie rod is connected. The second flange 30 may be formed at one side of the knuckle body 10 in a direction substantially perpendicular to a plane of the knuckle body 10. An engagement hole 32 is provided at the second flange 30, and a tie rod bushing 74 is inserted into the engagement hole 32 such that the vehicle knuckle is configured to be connected to the tie rod.

The third flange 40 is a part to which a lower arm constituting a suspension is connected. The third flange 40 may be formed at one side of the knuckle body 10 in a direction substantially perpendicular to the plane of the knuckle body 10. An engagement hole 42 is provided at the third flange 40, and a lower arm bushing 76 is inserted into the engagement hole 42 such that the vehicle knuckle is connected to the lower arm.

The fourth flange 50 is a part to which an upper arm constituting the suspension is connected. The fourth flange 50 may be formed at one side of the knuckle body 10 in a direction substantially perpendicular to the plane of the knuckle body 10. An engagement hole 52 is provided at the fourth flange 50, and an upper arm bushing 78 is installed at the engagement hole 52 such that the vehicle knuckle is connected to a strut assembly.

The bushings (the caliper bushing 72, the tie rod bushing 74, the lower arm bushing 76, and the upper arm bushing 78) installed at the flanges of the vehicle knuckle may be configured such that only one bushing is installed in one direction of the engagement hole. However, the embodiment shown in the drawing is configured such that the bushings are installed on both sides of the engagement hole so as to perform more stable support.

According to the present invention, the vehicle knuckle is configured to be formed using carbon chips. In the vehicle knuckle, the knuckle body 10, the first flange 20, the second flange 30, the third flange 40, and the fourth flange 50, which constitute the vehicle knuckle, may be integrally formed with carbon chip materials. Accordingly, the vehicle knuckle may be manufactured to be lighter in weight than a conventional vehicle knuckle formed of metal materials and may be manufactured with significantly improved productivity as compared to a vehicle knuckle made of CFRP films in the form of a continuous fiber. A method for manufacturing a vehicle knuckle using carbon chips according to the present invention and the effects of the vehicle knuckle manufactured by such a method will be described in detail below.

Meanwhile, the vehicle knuckle shown in FIG. 3 is configured in a knuckle structure of a double wishbone type in which an upper arm and a lower arm, each having an approximate A-shape, are connected to upper and lower portions of the knuckle, but the vehicle knuckle according to the present invention is not limited to the illustrated structure. The vehicle knuckle may be formed in any other arbitrary existing knuckle structure such as a MacPherson strut type knuckle structure in which a strut is directly installed on an upper end of a knuckle, a multi-link type knuckle structure to which upper arm and lower arm, each having an l-shaped link structure, are applied, and the like.

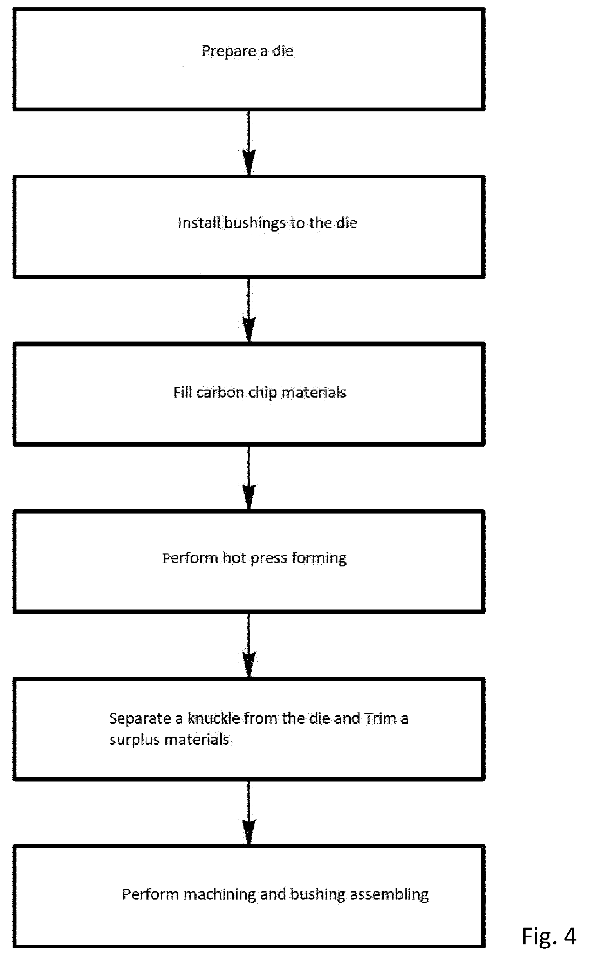

FIG. 4 illustrates an exemplary flowchart of a method for manufacturing a vehicle knuckle according to the present invention. As shown in FIG. 4, the vehicle knuckle is manufactured through the following steps: preparing a die for forming a vehicle knuckle, locating bushings (hub bushing, hub bolt bushing, caliper bushing, and the like) to the die, filling the die with carbon chip materials, hot press forming the carbon chip materials filled in the die, separating the vehicle knuckle from the die, trimming and removing surplus materials attached to an exterior, and an performing mechanical machining required for the vehicle knuckle and mounting the bushings to the vehicle knuckle. Hereinafter, the method of manufacturing a vehicle knuckle according to the present invention will be described in more detail.

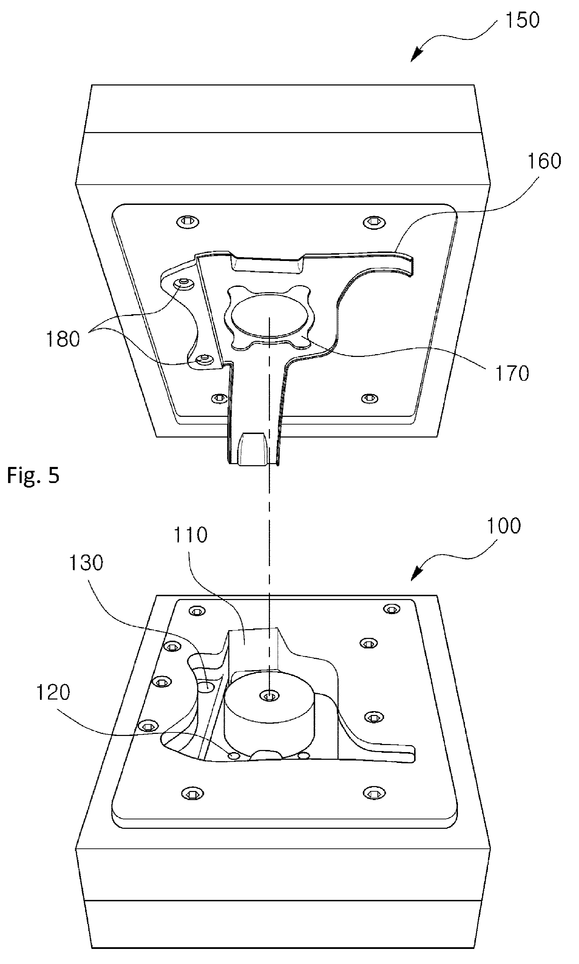

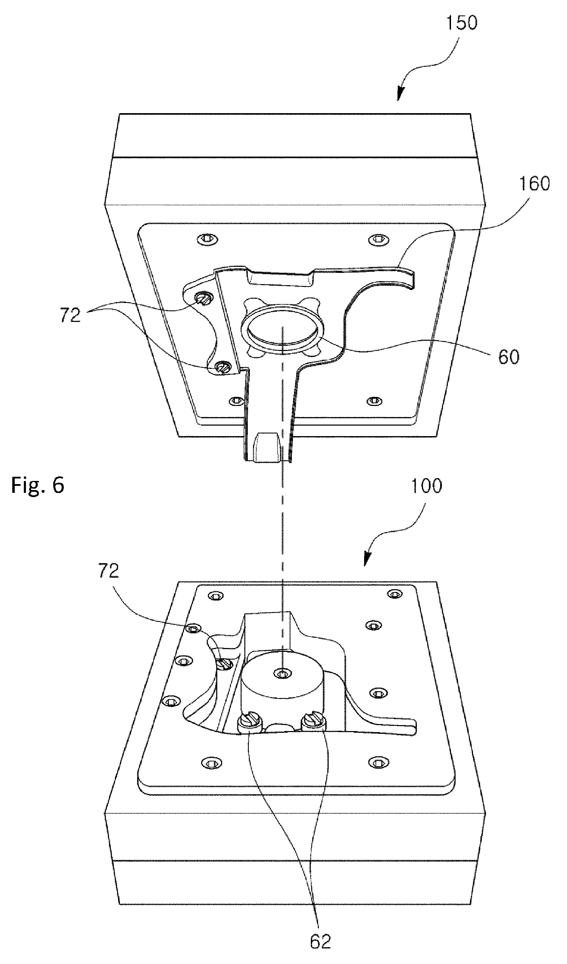

In order to manufacture a vehicle knuckle a die for forming the vehicle knuckle should be prepared first. FIGS. 5 and 6 exemplarily illustrate a die (a lower die and an upper die) which may be used to manufacture the vehicle knuckle according to one embodiment of the present invention. As shown in FIG. 5, a lower die 100 may comprise a recess 110 formed in a shape corresponding to an outer shape of a vehicle knuckle, which will be manufactured, at a central portion of the lower die 100. Hub bolt bushing installation portions 120 for installing the hub bolt bushings 62 and caliper bushing installation portions 130 for installing the caliper bushings 72 may be provided at the recess 110. Meanwhile, an upper die 150 interacting with the lower die 100 may be formed as similar to a conventional forming device. For example, as shown in Fig. 5, the upper die 150 may comprise a pressurizing portion 160 having a shape corresponding to the outer shape of the vehicle knuckle so as to be inserted into the recess 110 of the lower die 100, and may be configured to pressurize materials (carbon chips) inserted into the recess 110 of the lower die 100. A hub bushing installation portion 170 for installing the hub bushing 60 and caliper bushing installation portions 180 for installing the caliper bushings 72 may be provided at the upper die 150.

When the die is prepared, the bushings are inserted into bushing installation portions of the die, as shown in FIG. 6. Specifically, according to one embodiment of the present invention, the hub bolt bushings 62 and the caliper bushings 72 are inserted and installed in the lower die 100, and the hub bushing 60 and the caliper bushings 72 are inserted and installed in the upper die 150. However, when the vehicle knuckle is formed in a state in which the bushings are located at the dies as in the method for producing a vehicle knuckle according to the present invention, it is possible to more simplify a knuckle manufacturing process and further reducing a manufacturing time, since the vehicle knuckle may be formed in a state in which the bushings are already inserted.

When the bushings are located to the die, the die (specifically, the recess 110 of the lower die 100) is filled with carbon chips as much weight as required for forming the vehicle knuckle, and the lower die 100 is pressurized with the upper die 150 such that the vehicle knuckle is hot press formed in a high temperature and high pressure environment. For example, according to one embodiment of the present invention, the carbon chip materials filled in the die may be hot formed at a temperature of 150 °C for 20 minutes in a state of applying a high pressure load in the range of 100 to 120 bar. Meanwhile, according to one embodiment of the present invention, after the hot forming process is completed, the vehicle knuckle may be cured for a predetermined period of time.

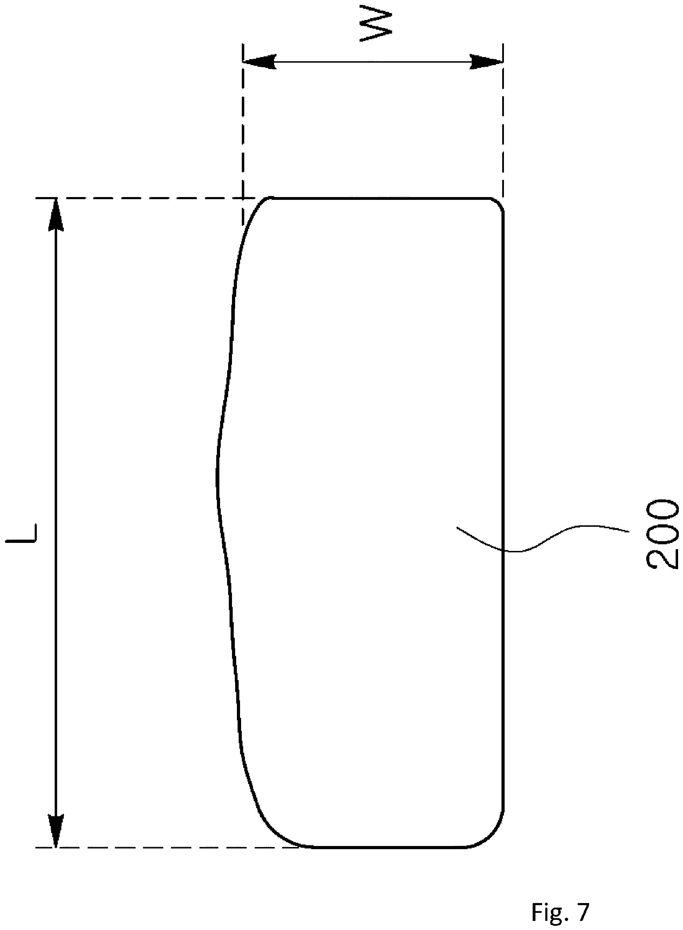

According to one embodiment of the present invention, the carbon chip used for forming the vehicle knuckle may be a material having a predetermined size. For example, according to one embodiment of the present invention, the carbon chip 200 used for forming the vehicle knuckle may have a predetermined size (a length L in the range of 10 mm to 150 mm (*see* FIG. 7), and a width W in the range of 3 mm to 20 mm) to secure mechanical strength and good productivity. When the carbon chip 200 has an excessively large or small size out of the predetermined size, there is a concern in that mechanical strength may be too reduced or productivity may be significantly degraded. For example, when the carbon chip 200 has a length over 150 mm, the carbon chip 200 may have a fiber texture with orientation similar to a continuous fiber, and productivity may be degraded similar to a conventional CFRP film material due to the orientation of the fiber texture. On the other hand, when the carbon chip 200 has a length of less than 10 mm, the carbon chip 200 may have too low mechanical properties and may be unsuitable for forming a vehicle structure such as a knuckle since the carbon chip 200 has a form similar to that of a discontinuous fiber.

Meanwhile, when the above-described hot forming operation is completed, a preform of the vehicle knuckle is formed. When the formation of the preform is completed, the preform is separated from the die, and the surplus materials attached to an exterior of the preform are removed through a trimming process.

Thereafter, when mechanical machining necessary for the knuckle preform is performed and the bushings are assembled, the knuckle product is completed. For example, engagement holes into which a tie rod bushing, a lower arm bushing, and an upper arm bushing are inserted may be formed at a knuckle preform, the corresponding bushings may be inserted into the engagement holes, and mechanical machining may be performed to form through-holes according to precision required for the bushings.

After a series of the above-described processes are performed, a vehicle knuckle product made of carbon chips according to one embodiment of the present invention is completed.

The method for manufacturing a vehicle knuckle according to the present invention and the vehicle knuckle produced according to the manufacturing method may have the following advantages.

First, since the vehicle knuckle is manufactured by hot press forming the carbon chips, the vehicle knuckle may be manufactured in a considerably light weight as compared to a knuckle product of metal materials which is conventionally used. Further, unlike a case in which a vehicle knuckle is formed of conventional CFRP films (continuous fiber), a preparation of the formation may be completed through a simplified process of pouring a required weight of the carbon chips into the die without a cumbersomeness in that the cut films should be stacked according to orientation of a fiber texture. Therefore, productivity can be significantly improved and mass production can be implemented.

Further, when the vehicle knuckle is formed by stacking CFRP films (continuous fiber), the vehicle knuckle is inevitably configured to insert the bushing into the bushing installation portion after machining the bushing installation portion in the knuckle formed by stacking the CFRP film. Whereas, when the vehicle knuckle is formed using the carbon chips according to one embodiment of the present invention, the vehicle knuckle can be formed in a state in which the bushings (i.e., the bushings vertically installed at the knuckle body such as the hub bushing 60, the hub bolt bushings 62, and the caliper bushings 72) are installed in a pressurizing direction of the die, and thus it is possible to further reduce a knuckle producing process and to further improve productivity.

While the present invention has been described with reference to specific items such as particular components, exemplary embodiments, and drawings, these are merely provided to help understanding the present invention, and the present invention is not limited to these embodiments, and those skilled in the art to which the present invention pertains can variously alter and modify from the description of the present invention.

Therefore, the scope of the present invention should not be limited to the above-described embodiments and it should be considered as corresponding to the scope of the appended claims.

## Claims

1. A method for manufacturing a vehicle knuckle, comprising:
preparing a die (100, 150) for forming the vehicle knuckle;
locating bushings (60, 62, 72) in the die (100, 150);
filling the die (100, 150) with carbon chip materials;
hot-press-forming the carbon chip materials filled in the die (100, 150);
separating the formed vehicle knuckle from the die (100, 150);
trimming and removing surplus materials attached to the separated vehicle knuckle; and
machining the vehicle knuckle and assembling bushings (74, 76, 78).

2. The method according to claim 1, wherein when locating the bushings in the die (100, 150), the bushings (60, 62, 72) installed in a pressurizing direction of the die are located in the die (100, 150).

3. The method according to claim 2, wherein when locating the bushing in the die (100, 150), caliper bushings (72) and hub bolt bushings (62) are located to a lower die (100) and a hub bushing (60) and caliper bushings (72) are located to an upper die (150).

4. The method according to claim 3, wherein the carbon chip material has a length L in a range of 10 mm to 150 mm and a width W in a range of 3 mm to 20 mm.

## Patentansprüche

1. Verfahren zur Herstellung eines Fahrzeug-Achsschenkelgelenks, umfassend:
Vorbereiten einer Gussform (100, 150) zum Bilden des Fahrzeug-Achsschenkelgelenks;
Platzieren von Lagern (60, 62, 72) in der Gussform (100, 150);
Füllen der Gussform (100, 150) mit Kohlenstoffspanmaterialien;
Heißpressen der in die Gussform (100, 150) gefüllten Kohlenstoffspanmaterialien;
Trennen des geformten Fahrzeug-Achsschenkelgelenks von der Gussform (100, 150);
Beschneiden und Entfernen von überschüssigem Material, das an dem abgetrennten Fahrzeug-Achsschenkel anhaftet; und
Bearbeiten des Fahrzeug-Achsschenkelgelenks und Montieren der Lager (74, 76, 78).

2. Verfahren nach Anspruch 1, wobei, wenn die Lager in der Gussform (100, 150) platziert werden, die Lager (60, 62, 72), die in einer Druckrichtung der Form installiert sind, in der Form (100, 150) angeordnet werden.

3. Verfahren nach Anspruch 2, wobei, wenn die Lager in der Gussform (100, 150) platziert werden, Sattel-Lager (72) und Nabenbolzen-Lager (62) an einer unteren Gussform (100) platziert werden und ein Naben-Lager (60) und Sattel-Lager (72) an einer oberen Gussform (150) platziert werden.

4. Verfahren nach Anspruch 3, wobei das Kohlenstoffspanmaterial eine Länge L in einem Bereich von 10 mm bis 150 mm und eine Breite W in einem Bereich von 3 mm bis 20 mm aufweist.

## Revendications

1. Procédé de fabrication d'une fusée de véhicule, comprenant :
la préparation d'une matrice (100, 150) pour former la fusée de véhicule ;
le placement de bagues (60, 62, 72) dans la matrice (100, 150) ;
le remplissage de la matrice (100, 150) avec des matériaux de copeaux de carbone ;
le pressage à chaud des matériaux de copeaux de carbone remplis dans la matrice (100, 150) ;
la séparation de la fusée de véhicule formée de la matrice (100, 150) ;
le rognage et l'enlèvement des matériaux en excédent fixés à la fusée de véhicule séparée ; et
l'usinage de la fusée de véhicule et l'assemblage des bagues (74, 76, 78).

2. Procédé selon la revendication 1, dans lequel lorsque les bagues sont placées dans la matrice (100, 150), les bagues (60, 62, 72) installées dans une direction de pressurisation de la matrice sont placées dans la matrice (100, 150).

3. Procédé selon la revendication 2, dans lequel, lorsque la bague est placée dans la matrice (100, 150), des bagues d'étrier (72) et des bagues de boulon de moyeu (62) sont placées sur une matrice inférieure (100) et une bague de moyeu (60) et des bagues d'étrier (72) sont placées sur une matrice supérieure (150).

4. Procédé selon la revendication 3, dans lequel le matériau de copeaux de carbone présente une longueur L dans une plage de 10 mm à 150 mm et une largeur W dans une plage de 3 mm à 20 mm.
